# EUROPÄISCHE PATENTSCHRIFT

(11) **EP 3 702 773 B1**
(45) Veröffentlichungstag und Bekanntmachung des Hinweises auf die Patenterteilung: **02.02.2022**
(21) Anmeldenummer: 20168650.8
(22) Anmeldetag: 26.03.2015
(51) Int. Cl.: G01N 30/06, G01N 30/24, G01N 1/40, G01N 35/10, B01L 9/06, B01L 3/00

(54) **VORRICHTUNG FÜR EINE FESTPHASENMIKROEXTRAKTION**
DEVICE FOR A SOLID PHASE MICROEXTRACTION
DISPOSITIF POUR UNE MICROEXTRACTION EN PHASE SOLIDE

(30) Priorität: 31.03.2014 DE 102014004701
(43) Veröffentlichungstag der Anmeldung: 02.09.2020
(62) Teilanmeldung aus: 15000887.8
(73) Patentinhaber: Gerstel Systemtechnik GmbH & Co. KG, 45473 Mülheim (DE)
(72) Erfinder: BREMER, Ralf, 47199 Duisburg (DE); ROSE, Bernhard, 40627 Düsseldorf (DE)
(74) Vertreter: Sparing Röhl Henseler

(56) Entgegenhaltungen:
- WO-A2-2007/032039
- US-A1- 2004 037 747
- US-A1- 2009 199 621
- US-A1- 2012 264 227

## Beschreibung

Die Erfindung betrifft eine Vorrichtung für eine Festphasenmikroextraktion und Analyse zu untersuchender Substanzen, insbesondere zum Einsetzen in eine Thermodesorptionsvorrichtung eines Gaschromatographen nach dem Oberbegriff des Anspruchs 1.

Analysegeräte dienen der qualitativen und quantitativen Bestimmung von Probeninhaltsstoffen, insbesondere unter Einsatz chromatographischer Trennmethoden. Die Effizienz der Trenntechniken lässt sich in der Regel durch eine geeignete Probenvorbereitung oder Probenaufgabe steigern. Zur Höchstleistung in Präzision, Wiederholbarkeit und Probendurchsatz gelangt der Anwender indes nur, wenn es ihm gelingt, unter anderem die Probennahme zu automatisieren. Für Chromatographen, insbesondere Gaschromatographen, sind daher automatische Probenvorbereitungs- und -injektionseinrichtungen, so genannte Autosampler, bekannt.

Aus DE 102 19 790 C1 ist ein solcher Autosampler bekannt, der einen in drei zueinander senkrechten Richtungen verfahrbaren Aufnahmearm für einen Halter eines Probenaufnehmers umfasst. Derartige Autosampler sind für einen vorbestimmten, einfachen Ablauf, etwa eine Probenaufnahme mittels einer Spritze aus einer Ampulle (Vial) und Aufgabe der Probe in ein Probenaufgabesystem eines Analysegerätes, und einen für diesen Ablauf vorgeschlagenen Typ von Probenaufnehmern, etwa Spritzen bestimmter Größe, ausgelegt. Es ist deshalb auch bekannt, mehrere Aufnahmen zu einem Aufnahmearm vorzusehen.

Zum Ausführen einer Festphasenmikroextraktion (SPME) ist aus DE 691 02 700 T2 bekannt, eine in einem Gehäuse enthaltene Faser zu verwenden, die als Adsorbens fungiert. Die Faser befindet sich zunächst in einer als Gehäuse genutzten Nadel, die das Septum eines Probengefäßes durchstoßen kann. Die an einem Spritzen-Kolben befestigte Faser lässt sich dann aus der Nadel herausführen. Nach einer definierten Probennahmezeit, in der die Analyten zur Festphase diffundieren und dort adsorbiert werden, wird die Nadel zurückgezogen und anschließend in den Injektor eines Gaschromatographen eingebracht. Es schließt sich die Thermodesorption der Analyten und deren gaschromatographische Trennung und Bestimmung an. Die Sammlung kann sowohl in einer flüssigen Matrix als auch in der Gasphase oberhalb von Flüssigkeiten oder Feststoffen, die so genannte Headspace-Technik, erfolgen. Die Festphasenmikroextraktion mittels Faser lässt sich vollständig automatisieren und wird beispielsweise zur Pestizidanalytik in Wasserproben eingesetzt. Nachteilig ist, dass die Verwendung der Fasern ein aufwändiges Handhabungssystem mit Spritzen erfordert.

Aus EP 1 406 077 B1 ist ein Sammler für die Festphasenmikroextraktion und Analyse zu untersuchender Substanzen bekannt, der sich sowohl als Passivsammler als auch als Rührelement in einer Trägerflüssigkeit einsetzen lässt. Der Sammler besteht dazu aus einem stabförmigen Träger, auf den ein Schlauchmaterial als Adsorbens aufgezogen ist. Mit dem Schlauch ist eine wiegbare Phase und damit eine definierte Menge an aktiver Phase am Träger angebracht. Reproduzierbare Messergebnisse werden so erreicht. Nachteilig ist, dass dieser eigenständige Sammler aufgrund seiner fehlenden Anbindung an eine Spritze den automatisierten Einsatz erschwert.

Aufgabe der Erfindung ist es daher, eine Vorrichtung für eine Festphasenmikroextraktion zu schaffen, die die Handhabung von Proben zur analytischen Untersuchung verbessert.

Diese Aufgabe wird durch die Merkmale des Anspruchs 1 gelöst.

Hierdurch wird eine Vorrichtung für eine Festphasenmikroextraktion und Analyse zu untersuchender Substanzen, insbesondere zum Einsetzen in eine Thermodesorptionsvorrichtung eines Gaschromatographen, geschaffen, die das Erfassen von Substanzen an der Festphase des Sammlers verbessert mechanisiert. Eine Automatisierung des Einsatzes von Sammlern wird erleichtert, und zwar unabhängig davon, ob der Sammler als Faser, als ein auf einen Träger aufgezogenes Schlauchmaterial oder sonstiges Adsorbens ausgebildet ist.

Erfindungsgemäß ist das jeweilige Probengefäß mit einem Klemmring als Kappe versehen, der einen Anschlusssockel bildet für einen Transportadapter. Der Transportadapter bildet einerseits einen dichtsitzend aufsetzbaren Anschlusskopf und andererseits einen Anschlusseinsatz für den Sammler. Als Anschlusskopf ist der Transportadapter von einem automatisierten Greifer oder beweglichen Aufnahmearm erfassbar und stellt dabei sicher, dass das Probengefäß bei eingesetztem Sammler abgedichtet ist durch den Transportadapter. Neben einem selbstdichtenden Septum können dann insbesondere leicht mechanisch durchstoßbare Trenn- oder Scheidewände Verwendung finden. Dies sind beispielsweise Membranen, Metall- oder Kunststofffolien oder elastisch verformbare Durchgangsverschlusselemente.

Der als Klemmring ausgebildete Anschlusssockel erlaubt in einfacher Weise das Einbringen eines Dichtelementes, wobei dessen Verpressung bei einem Aufziehen des Klemmrings am Hals des Probengefäßes die Dichtfunktion erzeugt.

Bevorzugt ist die Verwendung von O-Ringen als Dichtelemente, da diese eine Dichtfunktion durch axiale als auch radiale Verpressung erlauben. Das Anschließen des Transportadapters an den Klemmring kann somit einfach durch eine radiale Verpressung des Dichtelementes erfolgen, wodurch zudem eine Haltkraft zwischen Klemmring und Transportadapter erzeugbar ist, die die Eigengewichtskraft des beprobten Probengefäßes übersteigt. Das Probengefäß kann folglich gehalten durch den Transportadapter transportiert und gegebenenfalls behandelt werden, beispielsweise in Schüttelvorrichtungen usw.

Der Sammler ist an dem stabförmigen Träger angeordnet und kann eine Faser sein oder kann den stabförmigen Träger mit verschiedensten Materialen belegen, die als Adsorbens fungieren. Da die Trennwand leicht mechanisch durchstoßbar ausbildbar ist, können mit einem Sammler belegte Träger als Durchstoßorgane eingesetzt werden, die Durchmesser im Bereich von mehreren Millimetern, beispielsweise 1 bis 5 mm, besitzen. Bei den im Stand der Technik verwendeten Fasern variiert dagegen der Durchmesser zwischen 0,05 und 1 mm. Insbesondere können jetzt auch mit schlauchförmigen Adsorbens belegte Träger als von einem Halter geführte Einsätze automatisiert in Probengefäße eingebracht und aus diesen entnommen werden.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch in perspektivischer Ansicht eine Vorrichtung zur Probenhandhabung mit Vorrichtungen für eine Festphasenmikroextraktion gemäß einem ersten Ausführungsbeispiel,
Fig. 2 zeigt den Ausschnitt Z von Fig. 1 in vergrößerter Darstellung,
Fig. 3 zeigt schematisch in perspektivischer Ansicht eine Explosionszeichnung der Vorrichtung für eine Festphasenmikroextraktion gemäß dem ersten Ausführungsbeispiel,
Fig. 4 zeigt schematisch eine Seitenansicht der Explosionszeichnung gemäß Fig. 3,
Fig. 5 zeigt schematisch einen Längsschnitt der Vorrichtung für eine Festphasenmikroextraktion gemäß dem ersten Ausführungsbeispiel,
Fig. 6 zeigt den Ausschnitt Y gemäß Fig. 5 in vergrößerter Darstellung,
Fig. 7 zeigt schematisch und teilweise geschnitten einen Rüttler, in den eine Vorrichtung für eine Festphasenmikroextraktion gemäß dem ersten Ausführungsbeispiel eingesetzt ist,
Fig. 8 zeigt schematisch einen Längsschnitt der Vorrichtung für eine Festphasenmikroextraktion gemäß einem zweiten Ausführungsbeispiel,
Fig. 9 zeigt schematisch und teilweise geschnitten eine Vorrichtung für eine Festphasenmikroextraktion gemäß einem dritten Ausführungsbeispiel,
Fig. 10 zeigt den Ausschnitt V gemäß Fig. 9 in vergrößerter Darstellung,
Fig. 11 zeigt schematisch in perspektivischer Ansicht eine Explosionszeichnung der Vorrichtung für eine Festphasenmikroextraktion gemäß einem vierten Ausführungsbeispiel,
Fig. 12 zeigt schematisch eine Seitenansicht der Explosionszeichnung gemäß Fig. 11,
Fig. 13 zeigt schematisch in perspektivischer Ansicht eine Explosionszeichnung der Vorrichtung für eine Festphasenmikroextraktion gemäß einem fünften Ausführungsbeispiel,
Fig. 14 zeigt schematisch eine Seitenansicht der Explosionszeichnung gemäß Fig. 13,
Fig. 15 zeigt den Ausschnitt Z gemäß Fig. 14 in vergrößerter Darstellung,
Fig. 16 zeigt schematisch eine Seitenansicht einer Explosionszeichnung der Vorrichtung für eine Festphasenmikroextraktion gemäß einem sechsten Ausführungsbeispiel,
Fig. 17 zeigt schematisch in perspektivischer Ansicht und teilweise geschnitten die Explosionszeichnung gemäß Fig. 16.

Die Erfindung betrifft eine Vorrichtung für eine Festphasenmikroextraktion und Analyse zu untersuchender Substanzen, insbesondere zum Einsetzen in eine Thermodesorptionsvorrichtung eines Gaschromatographen. Zum Automatisieren der Festphasenmikroextraktion wird die Probennahme von Proben zur Probenvorbereitung oder Probenaufgabe vorzugsweise auf so genannten Autosamplern oder XYZ-Robotern durchgeführt.

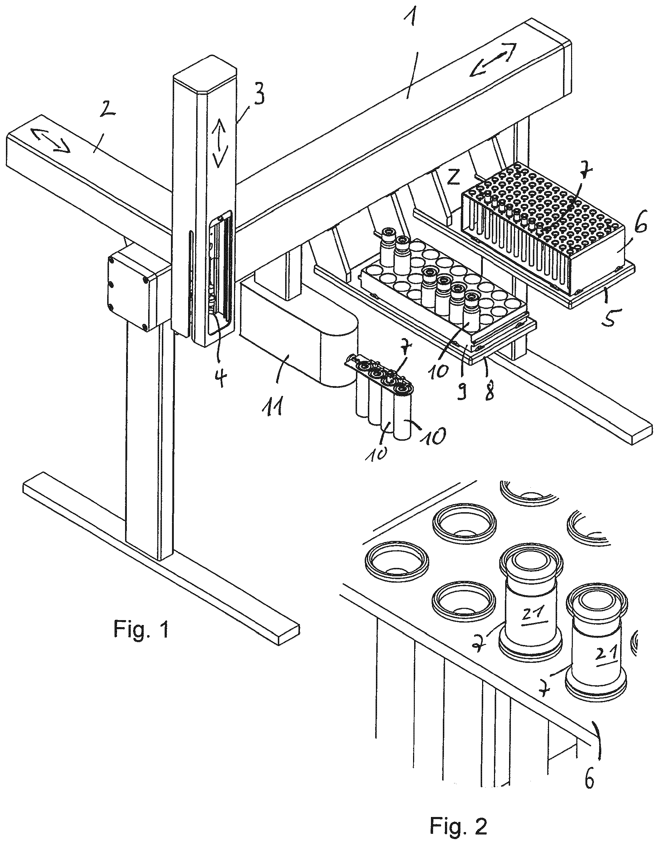

Fig. 1 und Fig. 2 zeigen einen Autosampler zur Probennahme. Der Autosampler umfasst vorzugsweise eine horizontale Schlittenführung 1 für einen längs der Schlittenführung 1 verfahrbaren Kreuzschlitten 2, der außerdem vorzugsweise in der Ebene der Schlittenführung 1 senkrecht zur Schlittenführung 1 verfahrbar ist, damit alle Stationen angefahren werden können. Am Ende des Kreuzschlittens 2 befindet sich ein vorzugsweise vertikal verfahrbarer Aufnahmearm 3.

Der bewegliche Aufnahmearm 3 ist zur wechselbaren Aufnahme mindestens eines Probenaufnehmers 4 ausgelegt. Der Aufnahmearm 3 dient dazu, den jeweiligen Probenaufnehmer 4 in gewünschte Positionen zu verfahren. Gemäß Fig. 1 umfasst der Autosampler einen ersten Tray-Holder 5 für ein Sammlertray 6, in dem eine Anzahl Sammlereinrichtungen 7 zur Verwendung in einer Probennahme angeordnet sind. Der Autosampler umfasst ferner einen zweiten Tray-Holder 8 für ein Probengefäßtray 9, in dem eine Anzahl beprobter Probengefäße 10 angeordnet sind. Mittels des Aufnahmearms 3 können wählbare Positionen über dem Sammlertray 6 und dem Probengefäßtray 9 angefahren werden, um beispielsweise jeweils eine Sammlereinrichtung 7 zu erfassen, zu transportieren und in ein Probengefäß 10 einzusetzen für eine wählbare Probennahmezeit.

Gemäß Fig. 1 umfasst der Autosampler auch vorzugsweise einen Rüttler oder Schüttler 11, der einzelne oder alle mit einer Sammlereinrichtung 7 versehenen Probengefäße 10 bewegt, um den Transport von Substanzen zur Festphase zu beschleunigen. Die Sammlung kann sowohl in einer flüssigen Matrix als auch in der Gasphase oberhalb von Flüssigkeiten oder Feststoffen, der so genannten Headspace-Technik, erfolgen.

Aus den Probengefäßen 10 werden mittels der Sammlereinrichtungen 7 Proben entnommen, indem die Sammlereinrichtungen 7 durch ein Auf- und Abfahren des Probenaufnehmers 4 in die jeweiligen beprobten Probengefäße 10 für eine wählbare Probennahmezeit eingesetzt werden. Die Bewegung wird ausgeführt durch den beweglichen Aufnahmearm 3. Die bevorzugte Bewegungsrichtung ist ein vertikales Verfahren des Probenaufnehmers 4 zur Probennahme.

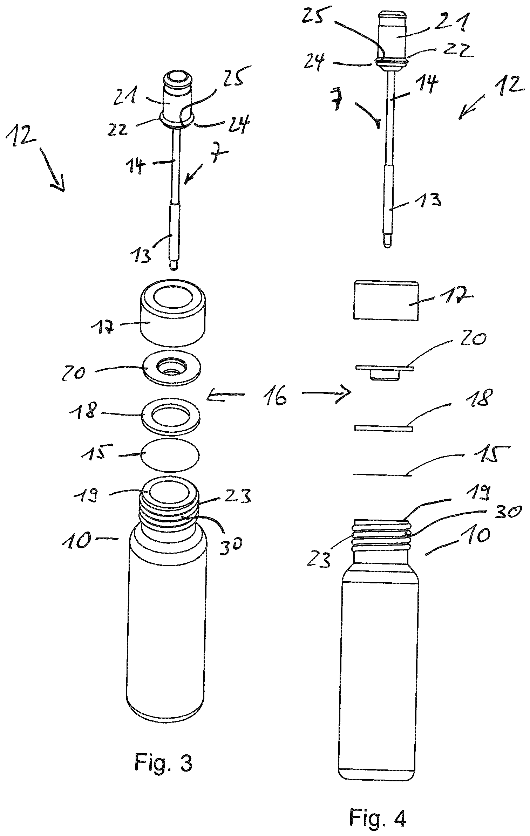

Wie Fig. 3 und Fig. 4 zeigen, ist für eine Festphasenmikroextraktion und Analyse zu untersuchender Substanzen, insbesondere zum Einsetzen in eine Thermodesorptionsvorrichtung eines Gaschromatographen, eine Vorrichtung 12 mit einer Sammlereinrichtung 7 und einem Probengefäß 10 vorgesehen, die gemäß einem ersten Ausführungsbeispiel wie folgt ausgebildet sind. Die Vorrichtung 12 umfasst danach mindestens einen Sammler 13 aus sorbierendem und/oder adsorbierendem Material, der an einem stabförmigen Träger 14 angeordnet ist. Die Vorrichtung 12 umfasst ferner mindestens ein Probengefäß 10, das mit einer durchstoßbaren Trennwand 15 oder Scheidewand abgedichtet verschließbar ist. In das Probengefäß 10 ist der Sammler 13 unter Durchstoßen der Trennwand 15 für eine Probennahmezeit einbringbar. Die Abdichtung mittels der Trennwand 15 ist dabei insbesondere fluiddicht ausgelegt.

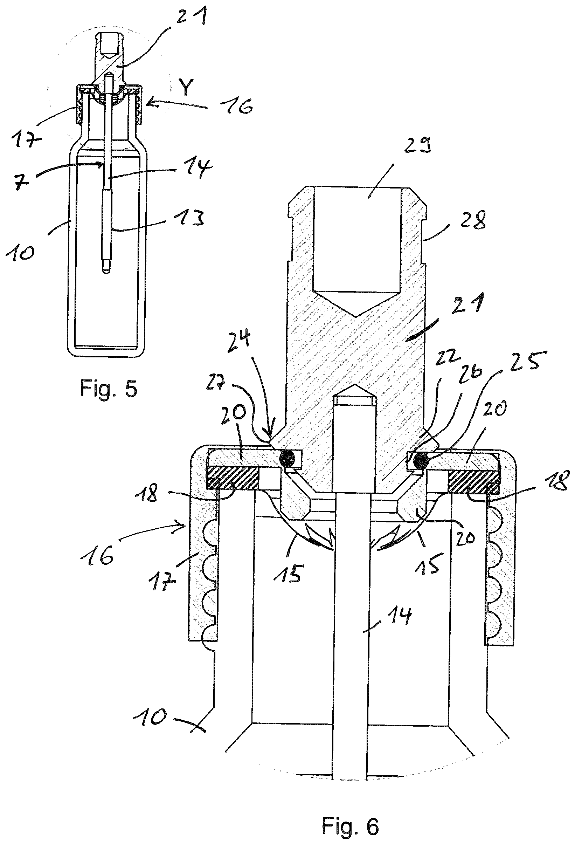

Ein Verschluss 16 des Probengefäßes 10 ist zusammengefügt aus der durchstoßbaren Trennwand 15 und einem am Probengefäß 10 befestigbaren Klemmring 17. Der Klemmring 17 presst die Trennwand 15 zusammen mit einem Dichtungselement 18 an einen oberen Rand 19 des Probengefäßes 10 an. Der Verschluss 16 weist ferner eine Aufnahmebuchse 20 auf, die in den Pressverbund zwischen Klemmring 17 und oberem Rand 19 des Probengefäßes 10 eingesetzt ist oder beispielsweise einstückig (nicht dargestellt) mit dem Klemmring 17 ausgebildet sein kann. Die Aufnahmebuchse 20 bildet ein Adaptergegenstück für einen Transportadapter 21 (vgl. Fig. 6), der an einem Handhabungsende des stabförmigen Trägers 14 befestigt ist. Das Dichtungselement 18 kann als O-Ring ausgebildet sein.

Der Transportadapter 21 besitzt eine Halterung 22, die in der Aufnahmebuchse 20 mit einer Dichtflächenpressung 24 befestigbar ist zur lösbaren Befestigung des Transportadapters 21 am Verschluss 16 des Probengefäßes 10, wenn der Sammler 13 nach Durchstoßen der Trennwand 15 in das Probengefäß 10 eingesetzt ist, wie insbesondere Fig. 5 und Fig. 6 zeigen.

Der Klemmring 17 ist hier als ein Befestigungsring auf den Hals 23 des Probengefäßes 10 aufgeschraubt mittels Schraubverschluss 30. Alternativ kann der Klemmring 17 auch aufgequetscht oder aufgerastet sein.

Die durchstoßbare Trennwand 15 ist vorzugsweise als Membran oder Metall- oder Kunststofffolie ausgebildet. Als Material für die Folien sind beispielhaft genannt Aluminium, Teflon, Polypropylen. Das Material für die Folien ist vorzugsweise chemisch inert für die einzubringenden/eingebrachten Proben. Die Folie, die einfach mechanisch durchstoßbar ist, insbesondere auch für den Sammler 13 mit Durchmessern größer 1 mm, ersetzt das Septum als Verschluss für das Probengefäß 10. Die vom Septum bewirkte Abdichtung übernimmt bei der Vorrichtung 12 die Trennwand 15 in Verbindung mit der Dichtflächenpressung 24 und dem Dichtungselement 18, die den Transportadapter 21 gegenüber dem Klemmring 17 und den Klemmring 17 gegenüber dem Probengefäß 10 abdichten. Das Abdichten erfolgt vorzugsweise gasdicht.

Erfindungsgemäß wird also ein Dichtungssystem mit vorzugsweise zwei Dichtringen geschaffen, um einen Stofffluss zwischen den funktionsmäßig voneinander getrennten Räumen eines Probengefäßes 10 und einer Außenumgebung bei eingesetztem Sammler 13 nach durchstoßener Trennwand 15 auszuschließen, und zwar unter gleichzeitiger Bereitstellung einer Sammlereinrichtung 7, die zur Probennahme und Probenabgabe von einem automatisierten Sampler oder Roboter erfasst und transportiert werden kann. Dabei wird sichergestellt, dass unabhängig vom Material der Trennwand 15 auch nach einem Durchstoßen der Trennwand 15 die Abdichtung des Probengefäßes 10 gewährleistet ist. Dies gilt insbesondere für Materialien, die keine eigene elastische Verschlusswirkung besitzen, wie beispielsweise Metallfolien, bei denen das Durchstoßen beispielsweise ein Durchstechen bewirken kann.

Wie insbesondere Fig. 5 und Fig. 6 zeigen, weist der Transportadapter 21 für die Dichtflächenpressung 24 vorzugsweise eine Ringnut 26 zum Einsetzen einer in der Aufnahmebuchse 20 radial verpressbaren Dichtung mittels O-Ring 25 auf. Die Dichtflächenpressung 24 kann derart ausgebildet sein, dass deren Haltekraft ausreicht, das Probengefäß 10 über den Transportadapter 21 zu bewegen, ohne dass zusätzliche Haltemittel erforderlich sind. An der Halterung 22 kann ein vorstehender Rand 27 (vgl. Fig. 6) ausgebildet sein, der als Anschlag an der Aufnahmebuchse 20 dient. Die Dichtflächenpressung 24 zwischen der Halterung 22 des Transportadapters 21 und der Aufnahmebuchse 20 des Verschlusses 16 ist dann sicher positionierbar.

Der Transportadapter 21 kann Anschlusselemente 28, 29 für verschiedene Einbausituationen an einem Probenaufnehmer 4 aufweisen.

Der Sammler 13 umfasst beispielsweise einen auf den stabfömigen Träger 14 aufgezogenen Schlauch aus sorbierendem und/oder adsorbierendem Material. Alternativ kann der Träger 14 zur Ausbildung des Sammlers 13 mit verschiedensten Materialien als Adsorbens belegt sein. Erfindungsgemäss besitzt der Träger 14 einen Durchmesser im Bereich von 1 bis 6 mm. Die Belegung mit dem Adsorbens liegt erfindungsgemäss in einem Dickenbereich von 0,05 bis 2 mm. Der Träger 14 kann alternativ als ein Röhrchen (nicht dargestellt) ausgebildet sein, um beispielsweise während einer Probennahme im Probengefäß 10 Zudosierungen über die Sammlereinrichtung 7 vornehmen zu können.

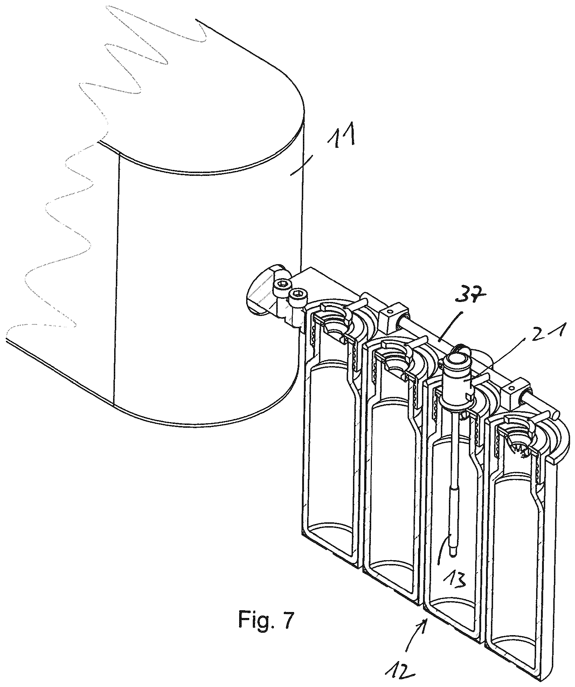

Die Vorrichtung 12 kann als transportierbarer Probennehmer in verschiedene Behandlungsstationen bewegt werden, wie beispielsweise in einen Rüttler/Schüttler 11, wie in Fig. 7 dargestellt. Um dabei die Vorrichtung 12 zu fixieren, kann eine Halteeinrichtung 37 vorgesehen sein. Zusätzlich kann eine Temperierung der Vorrichtung 12 vorgesehen sein.

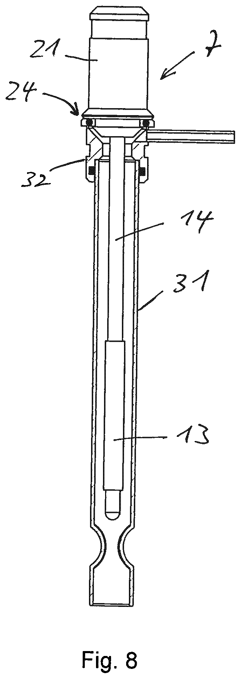

Wie Fig. 8 zeigt, kann die Sammlereinrichtung 7 zur Probennahme oder nach Beendigung der Probennahme in ein durchspülbares Röhrchen 31 einsetzbar sein, wobei die Dichtflächenpressung 24 des Transportadapters 21 mit einem Anschlusskopf 32 am Einsetzende des Röhrchens 31 erfolgen kann.

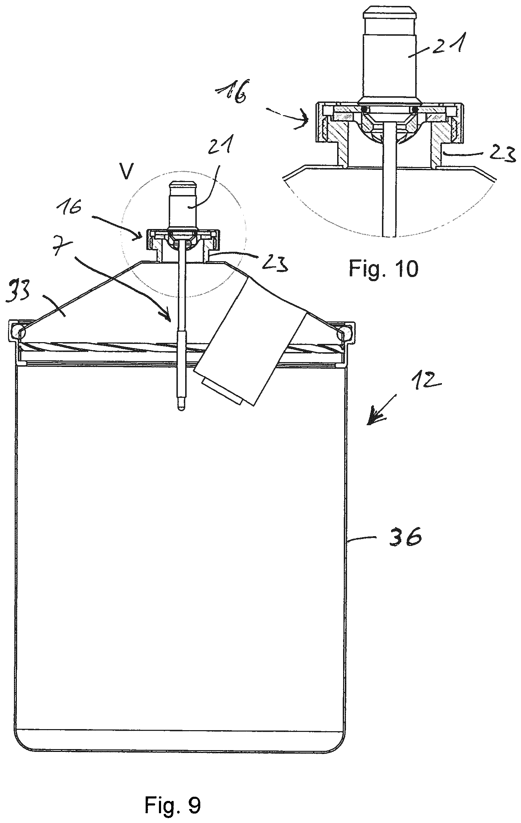

Wie die Fig. 9 und Fig. 10 gemäß einem dritten Ausführungsbeispiel zeigen, kann der Sammler 13 zur Adsorption oder Desorption der aufgenommenen Substanzen in einen Druckbehälter 36 als Head-Space-Gefäß eingebracht werden. Der Druckbehälter 36 weist einen Deckel 33 auf, der kopfseitig einen Hals 23 zur Anbringung des Verschlusses 16 aufweist, wie vorstehend beschrieben. Der Transportadapter 21 kann auch für Desorptionszwecke genutzt werden, wenn den zugehörigen Geräten ein Verschluss 16 wie vorstehend beschrieben zugeordnet wird.

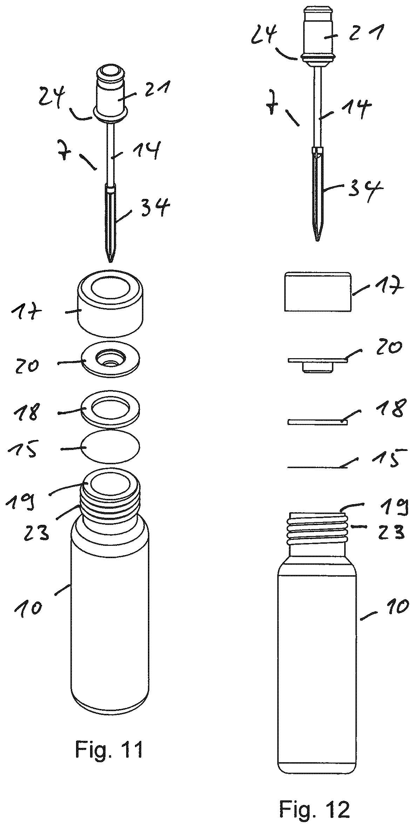

Fig. 11 und Fig. 12 zeigen ein viertes Ausführungsbeispiel der Vorrichtung 12, die sich von dem ersten Ausführungsbeispiel gemäß Fig. 3 und Fig. 4 dadurch unterscheidet, dass der Sammler 13 eine Faser und einen die Faser umgebenden Käfig 34 umfasst. Im Übrigen gilt das vorstehend zum ersten Ausführungsbeispiel Gesagte entsprechend.

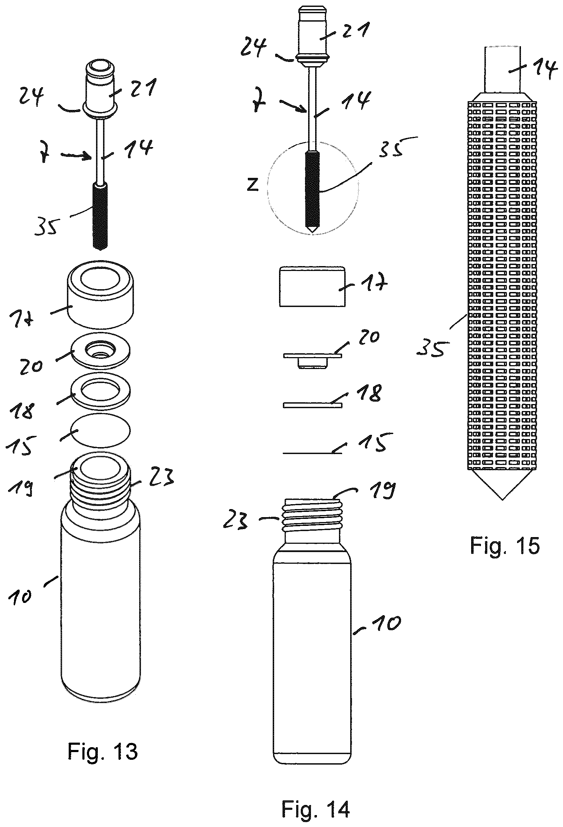

Fig. 13 bis Fig. 15 zeigen ein fünftes Ausführungsbeispiel der Vorrichtung 12, bei der der Sammler 13 einen durchströmbaren Hohlkörper 35 mit einer vorzugsweise gitterartigen Außenwand, in den pulverförmiges sorbierendes und/oder adsorbierendes Material eingebracht ist, umfasst. Im Übrigen gilt das vorstehend zum ersten Ausführungsbeispiel Gesagte entsprechend.

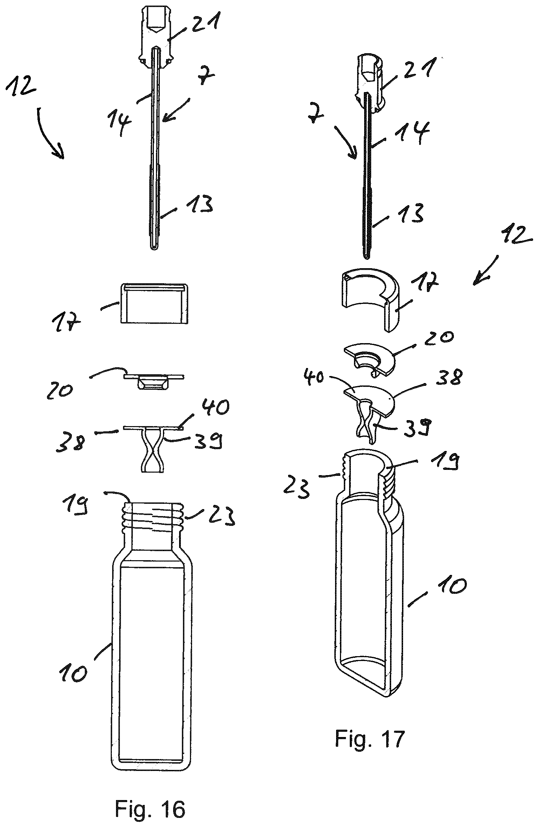

Fig. 16 und Fig. 17 zeigen ein sechstes Ausführungsbeispiel der Vorrichtung 12, bei der der Verschluss 16 eine durchstoßbare Funktionstrennwand 38 aufweist. Diese Funktionstrennwand 38 wird gebildet von einem elastisch verformbaren Durchgangsverschlusselement 39, das hier beispielsweise als elastischer Konusverschluss ausgebildet ist. Beim Durchstoßen dieses elastischen Durchgangsverschlusselementes 39 drückt die Sammlereinrichtung 7 beim Einführen in das Probengefäß 10 die Wandung des Durchgangsverschlusselementes 39 etwas zur Seite. An der Funktionstrennwand 38 kann unmittelbar ein Dichtungsteller 40 angeordnet sein, der mit dem Klemmring 17 abdichtend auf den oberen Rand 19 des Probengefäßes 10 pressbar ist. Zusätzlich oder alternativ (nicht dargestellt) kann zum Dichtungsteller 40 das Dichtungselement 18 vorgesehen sein, wie vorstehend beschrieben. Im Übrigen gilt das vorstehend zum ersten Ausführungsbeispiel Gesagte entsprechend.

Als sorbierendes und/oder adsorbierendes Material für den Sammler 13 kann beispielsweise ein Material aus der Gruppe umfassend Polyethylenglykol, Silikon Octadecyltrichlorsilan, Polymethylvinylchlorsilan, flüssigkristalline Polyacrylate, gepfropfte selbstorganisierte monomolekulare Schichten, Graphen, Kohlenstoffnanoröhren, Ionische Flüssigkeiten und anorganische Beschichtungsmaterialien gewählt werden.

Nach einer Probennahme kann die Sammlereinrichtung 7 mit dem Sammler 13 in bekannter Weise in eine Thermodesorptionseinrichtung eingebracht werden. Anstatt in einer Thermodesorptionseinrichtung desorbiert zu werden, kann die Sammlereinrichtung 7 auch in eine eine organische Flüssigkeit enthaltende Extraktionseinrichtung eingebracht werden, wobei als organische Flüssigkeit eine solche verwendet wird, die eine hohe Wechselwirkung mit den zu untersuchenden Substanzen aufweist.

Die von der Sammlereinrichtung 7 desorbierten Substanzen werden vorzugsweise einer Aufgabeeinrichtung etwa eines Gaschromatographen zugeführt, um mittels eines Trägergases etwa über eine gaschromatographische Trennsäule einer Analyse zugeführt zu werden.

## Patentansprüche

1. Vorrichtung für eine Festphasenmikroextraktion und Analyse zu untersuchender Substanzen, insbesondere für eine Analyse in einem Gaschromatographen, mit mindestens einem Sammler (13) aus sorbierendem und/oder adsorbierendem Material, der an einem stabförmigen Träger (14) angeordnet ist, wobei der Träger (14) einen Durchmesser im Bereich von 1 bis 6 mm besitzt und die Belegung mit dem Adsorbens in einem Dickenbereich von 0,05 bis 2 mm liegt, und mit mindestens einem mit einer durchstoßbaren Trennwand (15) abgedichtet verschließbaren Probengefäß (10), in das der Sammler (13) unter Durchstoßen der Trennwand (15) für eine Probennahmezeit einbringbar ist, und der Verschluss (16) des Probengefäßes (10) zusammengefügt ist aus der durchstoßbaren Trennwand (15) und einem am Probengefäß (10) befestigbaren Klemmring (17), der die Trennwand (15) zusammen mit einem Dichtungselement (18) an einen oberen Rand (19) des Probengefäßes (10) anpresst, und der eine Aufnahmebuchse (20) aufweist, in der eine Halterung (22) eines an einem Handhabungsende des stabförmigen Trägers (14) befestigten Transportadapters (21) lösbar und mit Dichtflächenpressung (24) befestigbar ist, wenn der Sammler (13) nach Durchstoßen der Trennwand (15) in das Probengefäß (10) eingesetzt ist.

2. Vorrichtung nach Anspruch 1, **dadurch gekennzeichnet, dass** die durchstoßbare Trennwand (15) als Membran, Metall- oder Kunststofffolie oder elastisch verformbares Durchgangsverschlusselement (39) ausgebildet ist.

3. Vorrichtung nach Anspruch 1 oder 2, **dadurch gekennzeichnet, dass** der Transportadapter (21) eine Ringnut (26) zum Einsetzen einer in der Aufnahmebuchse (20) radial verpressbaren O-Ring-Dichtung (25) aufweist.

4. Vorrichtung nach einem der Ansprüche 1 bis 3, **dadurch gekennzeichnet, dass** in den Klemmring (17) ein Adaptergegenstück zur Ausbildung der Aufnahmebuchse (20) einsetzbar ist.

5. Vorrichtung nach einem der Ansprüche 1 bis 4, **dadurch gekennzeichnet, dass** der Transportadapter (21) Anschlusselemente (28, 29) für verschiedene Einbausituationen aufweist.

6. Vorrichtung nach einem der Ansprüche 1 bis 5, **dadurch gekennzeichnet, dass** der Sammler (13) eine Faser und einen die Faser umgebenden Käfig (34) umfasst.

7. Vorrichtung nach einem der Ansprüche 1 bis 5, **dadurch gekennzeichnet, dass** der Sammler (13) ein auf den stabförmigen Träger (14) aufgezogener Schlauch aus sorbierendem und/oder adsorbierendem Material ist.

8. Vorrichtung nach einem der Ansprüche 1 bis 5, **dadurch gekennzeichnet, dass** der Sammler (13) einen durchströmbaren Hohlkörper (35) mit eingebrachtem pulverförmigem sorbierendem und/oder adsorbierendem Material umfasst.

9. Vorrichtung nach einem der Ansprüche 1 bis 8, **dadurch gekennzeichnet, dass** zur Automatisierung der Festphasenmikroextraktion der Transportadapter (21) in bewegliche Aufnahmearme (3) von Autosamplern einsetzbar ist.

10. Vorrichtung nach einem der Ansprüche 1 bis 9, **dadurch gekennzeichnet, dass** der Klemmring (17) über einen Schraubverschluss (30) am Hals (23) des Probengefäßes (10) befestigbar ist.

11. Vorrichtung nach einem der Ansprüche 1 bis 10, **dadurch gekennzeichnet, dass** als sorbierendes und/oder adsorbierendes Material ein Material aus der Gruppe umfassend Polyethylenglykol, Silikon, Octadecyltrichlorsilan, Polymethylvinylchlorsilan, flüssigkristalline Polyacrylate, gepfropfte selbstorganisierte monomolekulare Schichten, Graphen, Kohlenstoffnanoröhren, Ionische Flüssigkeiten und anorganische Beschichtungsmaterialien.

## Claims

1. Device for solid-phase microextraction and analysis of substances to be analyzed, in particular for an analysis in a gas chromatograph, with at least one collector (13), which is made of sorbent and/or adsorbent material and is placed on a rod-like support (14), wherein the support (14) has a diameter in a thickness range of 1 mm to 6 mm and the lining with the adsorbent material lies in the range of 0,05 mm to 2 mm, and with at least one sample container (10), which is sealed with a pierceable partition wall (15) and into which the collector (13) is introduced piercing the partition wall (15) for a sampling time, and the sealing (16) of the sample container (10) is assembled from the pierceable partition wall (15) and a clamping ring (17), which can be mounted on the sample container (10) and presses the partition wall (15) together with a sealing element (18) onto an upper rim (19) of the sample container (10), and which comprises a socket (20) in which a fitting (22) of a transport adapter (21) which is attached to a handling end of the rod-like support (14) can be anchored detachably and with sealing surface pressure (24) after the support (14), on which the collector (13) is placed, is inserted as a penetrating member into the sample container (10) following piercing the partition wall (15).

2. Device according to Claim 1, **characterized in that** the pierceable partition wall (15) is designed as a membrane, a metal or plastic sheet or an elastically deformable passage-closing element (39).

3. Device according to Claim 1 or 2, **characterized in that** the transport adapter (21) has an annular groove (16) for inserting an O-ring seal (25) that can be pressed in radially into the socket (20).

4. Device according to one of Claims 1 to 3, **characterized in that** an adapter mating piece which shapes the socket (20) can be inserted into the clamping ring (17).

5. Device according to one of Claims 1 to 4, **characterized in that** the transport adapter (21) has connecting elements for different installation situations.

6. Device according to one of Claims 1 to 5, **characterized in that** the collector (13) comprises a fibre and a cage (34) surrounding the fibre.

7. Device according to one of Claims 1 to 5, **characterized in that** the collector (13) is a tube made of sorbent and/or adsorbent material which is pushed onto the rod-like support (14).

8. Device according to one of Claims 1 to 5, **characterized in that** the collector (13) comprises a flow through hollow body (35), with a powdery sorbent and/or adsorbent material inserted therein.

9. Device according to one of Claims 1 to 8, **characterized in that**, in order to automate the solid-phase microextraction, the transport adapter (21) can be used with movable receiving arms (3) of autosamplers.

10. Device according to one of Claims 1 to 9, **characterized in that** the clamping ring (17) can be mounted onto the neck (23) of the sample container (10) via a screw closure (30).

11. Device according to one of Claims 1 to 10, **characterized in that** the sorbent and/or adsorbent material is a material chosen from the group comprising polyethylene glycol, silicone, octadecyltrichlorosilane, polymethylvinyl chlorosilane, liquid-crystalline polyacrylates, grafted self-organized monomolecular layers, graphene, carbon nanotubes, ionic liquids and inorganic coating materials.

## Revendications

1. Dispositif pour une micro-extraction en phase solide et une analyse de substances à examiner, en particulier pour une analyse dans un chromatographe en phase gazeuse, avec au moins un collecteur (13) composé d'un matériau de sorption et/ou d'adsorption, qui est disposé au niveau d'un support (14) en forme de barre, le support (14) ayant un diamètre de 1 à 6 mm et le revêtement avec le matériau d'adsorption présentant une épaisseur de 0,05 à 2 mm, et avec au moins un récipient d'échantillons (10), pouvant être fermé de manière étanchéifiée par une cloison de séparation (15) pouvant être perforée, dans lequel le collecteur (13) peut être introduit en perforant la cloison de séparation (15) pendant une durée d'échantillonnage, et la fermeture (16) du récipient d'échantillons (10) est assemblée à partir de la cloison de séparation (15) pouvant être perforée et d'une bague de serrage (17), pouvant être fixée au niveau du récipient d'échantillons (10), qui comprime la cloison de séparation (15) conjointement avec un élément d'étanchéité (18), pouvant être introduit, au niveau d'un bord supérieur (19) du récipient d'échantillons (10), et qui présente une douille de logement (20), dans laquelle un élément de retenue (22) d'un adaptateur de transport (21) fixé au niveau d'une extrémité de manipulation du support (14) en forme de barre peut être desserré et peut être fixé avec une pression exercée sur les surfaces étanches (24) quand le support (14) équipé du collecteur (13) est inséré dans le récipient d'échantillons (10) en tant qu'organe de perforation après la perforation de la cloison de séparation (15).

2. Dispositif selon la revendication 1, **caractérisé en ce que** la cloison de séparation (15) pouvant être perforée est réalisée en tant que membrane, film métallique ou plastique ou élément de fermeture de passage (39) élastiquement déformable.

3. Dispositif selon la revendication 1 ou 2, **caractérisé en ce que** l'adaptateur de transport (21) présente une rainure annulaire (26) servant à insérer un joint torique (25) pouvant être comprimé radialement dans la douille de logement (20).

4. Dispositif selon l'une quelconque des revendications 1 à 3, **caractérisé en ce qu'**une contre-pièce d'adaptateur servant à réaliser la douille de logement (20) peut être insérée dans la bague de serrage (17).

5. Dispositif selon l'une quelconque des revendications 1 à 4, **caractérisé en ce que** l'adaptateur de transport (21) présente des éléments de raccordement (28, 29) pour différentes situations de montage.

6. Dispositif selon l'une quelconque des revendications 1 à 5, **caractérisé en ce que** le collecteur (13) comprend une fibre et une cage (34) entourant la fibre.

7. Dispositif selon l'une quelconque des revendications 1 à 5, **caractérisé en ce que** le collecteur (13) est un tuyau flexible, enfilé sur le support (14) en forme de barre, composé d'un matériau de sorption et/ou d'adsorption.

8. Dispositif selon l'une quelconque des revendications 1 à 5, **caractérisé en ce que** le collecteur (13) comprend un corps creux (35) pouvant être traversé avec du matériau pulvérulent de sorption et/ou d'adsorption introduit.

9. Dispositif selon l'une quelconque des revendications 1 à 8, **caractérisé en ce que** l'adaptateur de transport (21) peut être inséré dans des bras de logement (3) mobiles d'échantillonneurs automatiques pour automatiser la micro-extraction en phase solide.

10. Dispositif selon l'une quelconque des revendications 1 à 9, **caractérisé en ce que** la bague de serrage (17) peut être fixée par l'intermédiaire d'une fermeture à visser (30) au niveau du goulot (23) du récipient d'échantillons (10).

11. Dispositif selon l'une quelconque des revendications 1 à 10, **caractérisé en ce qu'**est choisi en tant que matériau de sorption et/ou d'adsorption un matériau issu du groupe comprenant le polyéthylène glycol, la silicone, l'octadécyltrichlorosilane, le polyméthylvinylchlorosilane, des polyacrylates cristallins liquides, des couches monomoléculaires auto-organisées greffées, du graphène, des nanotubes de carbone, des liquides ioniques et des matériaux de revêtement inorganiques.
